# EUROPÄISCHE PATENTSCHRIFT

(11) **EP 2 422 082 B1**
(45) Veröffentlichungstag und Bekanntmachung des Hinweises auf die Patenterteilung: **14.10.2015**
(21) Anmeldenummer: 10730700.1
(22) Anmeldetag: 20.04.2010
(51) Int. Cl.: F03D 11/00

(54) **ÜBERTRAGUNGSVORRICHTUNG FÜR EINE WINDTURBINE**
TRANSMISSION DEVICE FOR A WIND TURBINE
DISPOSITIF DE TRANSMISSION POUR UNE TURBINE ÉOLIENNE

(30) Priorität: 20.04.2009 DE 102009017824
(43) Veröffentlichungstag der Anmeldung: 29.02.2012
(73) Patentinhaber: Suzlon Energy GmbH, 18057 Rostock (DE)
(72) Erfinder: THIEL, Enrico, 18057 Rostock (DE); VILBRANDT, Reinhard, 18059 Rostock (DE)
(86) Internationale Anmeldenummer: PCT/EP2010/002411
(87) Internationale Veröffentlichungsnummer: WO 2010/121786

(56) Entgegenhaltungen:
- EP-A1- 0 718 495
- EP-A1- 0 754 624
- EP-A2- 1 522 725
- EP-A2- 1 568 883

## Beschreibung

Die Erfindung betrifft eine Übertragungsvorrichtung für eine Windturbine. Solche Übertragungsvorrichtungen dienen zum Übertragen bzw. zum Entladen von elektrostatischer Energie zwischen einer rotierbaren Drehvorrichtung und einer, der Drehvorrichtung gegenüber unrotierbar vorgesehenen Erdungsvorrichtung. Dabei umfasst die Übertragungsvorrichtung einen Halter, eine Schleifkontaktvorrichtung mit Anpressmitteln, und mindestens eine Elektrode mit Einstellmitteln zum Übertragen von Blitzstrom.

Die Elektrode kann zusammen mit einer Ringelektrode eine Funkenstrecke mit einer Schlagweite S ausbilden, wobei die Ringelektrode an der Drehvorrichtung angeordnet sein kann, oder mit einer zur Drehvorrichtung unrotierbaren Erdungsvorrichtung verbunden sein kann. Solche Übertragungsvorrichtungen werden dazu verwendet, um ein elektrostatisches Aufladen der Rotorwelle, der Rotornabe und der Rotorblätter gegenüber der Gondel der Windturbine zu verhindern. Denn dadurch können elektronische Bauteile in der Nabe beschädigt werden, oder das Wartungspersonal kann einem elektrischen Schlag ausgesetzt sein. Zum anderen wird bei einem Blitzeinschlag in den Rotor der Blitzstrom über die Übertragungsvorrichtung direkt in eine Erdungsvorrichtung abgeleitet. Dadurch werden elektrische Bauteile in der Gondel und insbesondere die Lager der Rotorwelle vor einer Beschädigung durch Blitzstrom geschützt.

Die DE 10 2004 012 946 A1 offenbart eine Windturbine mit einer Vorrichtung zum kontinuierlichen Entladen elektrostatischer Energie zwischen der Rotorwelle und dem Maschinenträger der Gondel. Dabei ist auf der Rotorwelle eine Ringelektrode angeordnet, die zusammen mit einer Schleifkontaktvorrichtung eine permanente elektrische Verbindung zwischen der Rotorwelle und der Erdung herstellt. So kann keine Aufladung des Rotors der Windturbine statt finden. Neben der Schleifkontaktvorrichtung ist weiterhin eine Elektrode an dem Maschinenträger vorgesehen, die zusammen mit der Ringelektrode eine Funkenstrecke ausbildet. Mit Hilfe dieser kann der energiereiche Blitzstrom von der Rotorwelle in den Maschinenträger übertragen werden.

Diese Konstruktion hat den gravierenden Nachteil, dass die Blitzstromübertragung nicht zuverlässig funktioniert, und somit die erwähnten Bauteile weiterhin einer Beschädigungsgefahr ausgesetzt sind. Der Grund dafür liegt darin, dass die relative Position der Rotorwelle bezüglich des Maschinenträgers im Betrieb variiert, bedingt durch die Toleranz der Lager und/oder Verformungen der Welle aufgrund von Lastwechseln. Dies führt dazu, dass die Schlagweite S der Funkenstrecke stark schwankt, z. T. bis zu fünf Millimeter. Ist die Funkenstrecke zu groß, so wird ein Blitzstrom den Weg des geringsten Widerstandes wählen, z. B. durch das Rotorlager. Es ist auch denkbar, dass die Elektrode die Ringelektrode berührt, was zu Verschleiß oder während eines Blitzstromflusses zu Verschweißungen führen kann.

Die EP 1 568 883 offenbart eine Alternative eines Blitzstromübertragungssystems, wobei eine Führungsrolle zwischen Ringelektrode und Elektrode verwendet wird, um somit eine konstantere Funkenstrecke zu realisieren. Diese ausführungsform hat den Nachteil, viele Verschleissteile aufzuweisen.

Es ist eine Aufgabe der Erfindung, eine verbesserte Übertragungsvörrichtung für eine Windturbine anzugeben, welche unter anderem die Nachteile des Stands der Technik vermeidet. Insbesondere soll dabei die Zuverlässigkeit und Haltbarkeit der Übertragungsvorrichtung erhöht werden.

Die Aufgabe wird erfindungsgemäß mit den Merkmalen des Hauptanspruchs 1 gelöst, indem der Halter drehfest an der Drehvorrichtung oder unrotierbar zur Erdungsvorrichtung angeordnet ist und weiterhin die Elektrode mittels einer Nachführungsvorrichtung mit Abstützmitteln bewegbar gegenüber dem Halter angeordnet ist. Dabei ist die Elektrode über die Abstützmittel derart gegenüber der Drehvorrichtung oder der Ringelektrode abgestützt, so dass die Schlagweite S ein minimales Maß nicht unterschreiten kann. Die Bewegbarkeit der Lagerung der Elektrode und die Nachführung, orientiert an der Drehvorrichtung oder an der Erdungsvorrichtung, ermöglicht, dass die Elektrode im Wesentlichen die Bewegung der Drehvorrichtung ebenfalls vollführt. Somit ist die relative Position der Elektrode zur Ringelektrode konstant bzw. ein minimales Maß der Schlagweite wird niemals unterschritten. Dadurch wird wirksam verhindert, dass die Elektrode die Ringelektrode an der Drehvorrichtung berührt.

Wenn der Halter unrotierbar zur Erdungsvorrichtung angeordnet ist, so können der Halter und die Erdungsvorrichtung durchaus Schwenk- oder Teilrotation zueinander ausüben, jedoch ist keine Voll- oder Mehrfachrotation der beiden Teile zueinander möglich.

Eine günstige Ausgestaltung der Erfindung lehrt, dass die Nachführungsvorrichtung Vorspannmittel umfasst, die wirksam zwischen dem Halter und den Abstützmitteln angeordnet sind. Dadurch liegen die Abstützmittel immer vorgespannt an der Drehvorrichtung oder/und der Ringelektrode an. Dies führt dazu, dass die Schlagweite S ein maximales Maß nicht überschreiten kann. Somit ermöglicht diese Ausgestaltung der Erfindung erstmals, dass die Funkenstrecke im Wesentlichen unabhängig von Bewegungen der Drehvorrichtung eine einstellbare konstante Schlagweite S aufweist, wodurch die Übertragung von Blitzströmen sichergestellt ist und die Lager oder andere Bauteile vor Beschädigung durch den Blitzströmfluss geschützt sind. Besonders effektiv wird dieser beschriebene positive Effekt erzeugt, indem die Elektrode schwenkbar und verschiebbar gegenüber dem Halter angeordnet ist.

Die Nachführungsvorrichtung umfasst weiterhin einen Träger, der beweglich an dem Halter angeordnet ist und die Elektrode und die Abstützmittel aufnimmt. Somit bildet die Nachführungsvorrichtung eine kompakte Baueinheit, die an den Halter montierbar ist. Dabei kann es vorteilhaft sein, wenn die Vorspannmittel an dem Halter und dem Träger angeordnet sind, und der Träger die Schleifkontaktvorrichtung aufnimmt.

Indem die Schleifkontaktvorrichtung und die Elektrode die gleiche Ringelektrode beaufschlagen, wird die Bauteilkomplexität weiter reduziert.

Eine besonders günstige Weiterentwicklung der Erfindung offenbart, dass die Abstützmittel als mindestens eine am Träger gelagerte Rolle ausgebildet sind. Aufgrund der Bewegung der Drehvorrichtung bzw. der Ringelektrode bezüglich der Abstützmittel unterliegen diese reibungsbedingtem Verschleiß. Dieser führt dazu, dass mit andauerndem Betrieb der Übertragungsvorrichtung die Schlagweite S der Funkenstrecke abnimmt. Durch die Verwendung von Rollen, kann der Verschleiß der Abstützmittel stark reduziert werden, wodurch es weniger zu der beschriebenen Verkleinerung der Schlagweite S kommen kann.

Die beschriebene Erfindung zeigt ihr Verbesserungspotential des Stands der Technik besonders deutlich, wenn die Übertragungsvorrichtung für die Rotorwelle einer Windturbine verwendet wird. Dabei ist also die Drehvorrichtung als Rotorwelle ausgebildet, wobei die Rotorwelle auch die Ringelektrode umfasst. Beispielsweise kann die Ringelektrode einstückig mit der Rotorwelle ausgebildet sein, z. B. durch Eindrehen in die Rotorwelle. Vorteilhaft ist es auch, wenn eine separate Ringelektrode auf der Rotorwelle angebracht ist, die mit Blitzableitern aus der Nabe der Windturbine verbunden ist. Eine separate Ringelektrode hat den Vorteil, dass diese bei Verscheiß einfach ausgetauscht werden kann, und zudem aus besonders günstigen Materialien zum Ausbilden eines Stromüberschlags über die Funkenstrecke hergestellt sein kann. Der Halter der Übertragungsvorrichtung wird dabei fest bzgl. des Maschinenträgers der Windturbine montiert, wobei Elektrode und/oder die Schleifkontaktvorrichtung mit der Erdungsvorrichtung verbunden sind. Diese Erdungsvorrichtung kann integriert durch den Halter und dessen Befestigung dargestellt sein. Es kann auch eine separate Erdungsvorrichtung vorgesehen sein, die verhindert, dass Blitzstrom übermäßig durch den Maschinenträger fließt. Dadurch werden elektromagnetische Auswirkungen reduziert.

Eine günstige Ausgestaltung der Erfindung lehrt, den Halter direkt an dem Hauptlager der Rotorwelle anzuordnen. Auf diese Weise wird eine besonders platzsparende und leichte Anordnung der Übertragungsvorrichtung ermöglicht.

Eine alternative Ausführung offenbart eine umgekehrt analoge Anordnung, wobei auch hier die Drehvorrichtung als Rotorwelle einer Windturbine ausgebildet ist. Im Gegensatz zur o. g. Ausführung ist nun der Halter an der Rotorwelle angeordnet. Die Ringelektrode ist drehfest bezüglich des Maschinenträgers angeordnet und umgreift die Rotorwelle. Somit rotiert die Übertragungs- und Nachführungsvorrichtung mit der Rotorwelle mit und stellt auf diese Weise die Funkenstrecke mit der feststehenden Ringelektrode dar, welche mit der Erdungsvorrichtung verbunden ist.

Eine alternative Ausführungsform der Erfindung führt an, dass die Drehvorrichtung eine Gondel bzw. der Maschinenträger einer Windturbine ist, wobei die Gondel auf einem feststehenden Turm drehbar montiert ist. Die Drehbarkeit der Gondel ermöglicht die Windnachführung, auch als "Gieren" bezeichnet, wobei die Gondel in horizontaler Ebene derart um eine im Wesentlichen vertikale Drehachse gedreht, so dass der Wind senkrecht eine Drehebene des Rotors anströmt, und folglich die Energieausbeute maximiert wird.

Bei einer ersten Ausgestaltung der voran stehenden Ausführungsform ist der Halter der Übertragungsvorrichtung mit Nachführungsvorrichtung an der Gondel oder an dem Maschinenträger angeordnet. Die Elektrode der Übertragungsvorrichtung kann dabei mit der Ringelektrode die Funkenstrecke ausbilden, indem die Ringelektrode an dem Turm vorgesehen ist und mit der Erdungsvorrichtung verbunden ist. Somit wird der Turm über die Ringelektrode von der Nachführungsvorrichtung beaufschlagt, wobei die Übertragungsvorrichtung um den Turm herum rotieren kann. Die Erdungsvorrichtung ist an dem Turm befestigt vorgesehen.

Eine zweite Ausgestaltung der voran stehenden Ausführungsform lehrt, dass die Ringelektrode an dem Maschinenträger oder an der Gondel vorgesehen ist und mit der Gondel um den Turm herum rotieren kann. Der Halter der Übertragungsvorrichtung hingegen ist all dem Turm angeordnet und trägt über die Nachführungsvorrichtung zumindest die Elektrode, welche mit der Erdungsvorrichtung verbunden ist.

Diese beiden Ausgestaltungen der alternativen Ausführungsform ermöglichten erstmals, dass ein Blitzstrom sicher und auf direktem Wege aus der Gondel in den Turm bzw. in die Erdungsvorrichtung geleitet wird.

Eine weitere nicht dargestellte Ausführungsform der Erfindung führt an, dass die Drehvorrichtung als Rotorblatt einer Windturbine mit einer Ringelektrode ausgebildet ist, und die Elektrode und/oder die Schleifkontaktvorrichtung mit der Erdungsvorrichtung verbunden sind. Das Rotorblatt kann sich bzgl. der Nabe des Rotors um seine eigene Pitchachse drehen, wodurch der Anströmwinkel des Rotorblatts zum Wind änderbar ist. Der Halter der Übertragungsvorrichtung kann dabei an der Rotornabe des Rotors angeordnet sein, wobei die Elektrode mit der Ringelektrode an dem Rotorblatt die Funkenstrecke ausbildet. Die Nachführungsvorrichtung stellt dabei sicher, dass die Schlagweite der Funkenstrecke konstant gehalten wird, auch wenn das Rotorblatt an der Übertragungsstelle eine über die Rotation hinausgehende Relativbewegung gegenüber der Nabe vollführt. Auf diese Weise kann sicher ein Blitzstrom aus dem Rotorblatt auf Erdungsvorrichtung. übertragen werden.

Die Erfindung umfasst auch eine Windturbine mit einer Übertragungsvorrichtung gemäß der voran beschriebenen Ausführungsbeispielen und Ausgestaltungen. Dabei können die beschrieben Merkmale teilweise oder auch vollständig verwirklicht sein, wodurch die Erfindung nicht eingeschränkt sein soll.

Weiter Einzelheiten der Erfindung gehen aus den Zeichnungen anhand der Beschreibung hervor. In den Zeichnungen zeigt
- Fig. 1: eine isometrische Ansicht einer Übertragungsvorrichtung gemäß einer ersten Ausführungsform, montiert an einem Hauptlager eine Rotorwelle einer Windturbine,
- Fig. 2: eine Aufsicht auf die Übertragungsvorrichtung gemäß Fig. 1,
- Fig. 3: einen Teilschnitt durch die Übertragungsvorrichtung gemäß Fig. 1,
- Fig. 4: eine Aufsicht auf eine weitere Ausgestaltung der Übertragungsvorrichtung, und
- Fig. 5: eine Prinzipdarstellung einer alternativen Ausführungsform der Übertragungsvorrichtung.

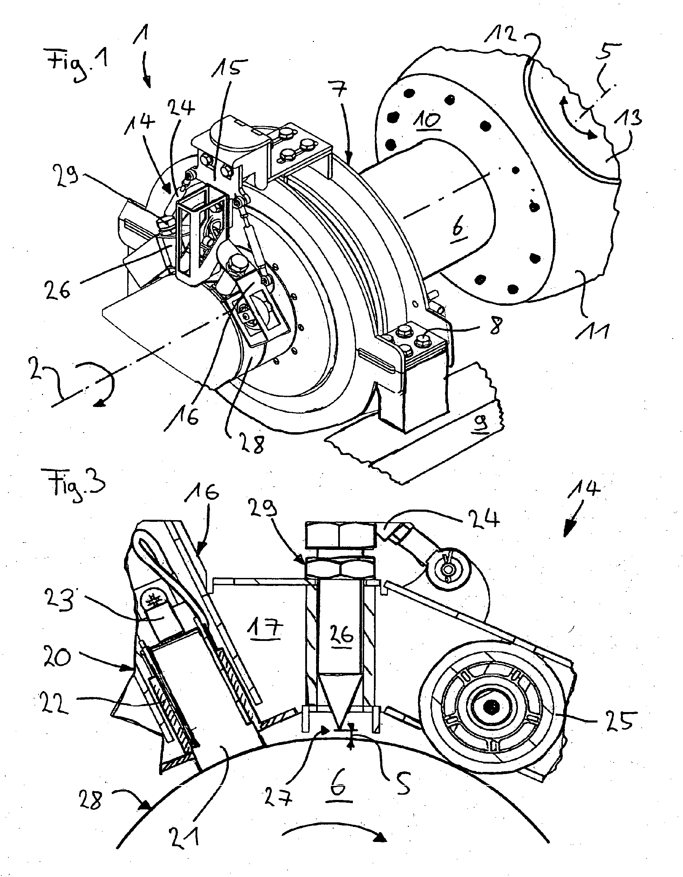

Ein erstes Ausführungsbeispiel der Erfindung wird anhand der Fig. 1 bis 3 dargestellt. Mittels Fig. 1 soll die Anbindung der Übertragungsvorrichtung 1 in der Windturbine erklärt werden, wozu eine Rotorwelle 6 und ein dazugehöriges Hauptlager 7 ausschnittsweise gezeigt sind. Das Hauptlager 7 ist über Verbindungsmittel 8 an einem Maschinenträger 9 in der nicht dargestellten Gondel der Windturbine befestigt.

An einem den Maschinenträger 9 überragenden Ende der Rotorwelle 6 befindet sich der Rotorflansch 10, an dem die Rotornabe 11 angeschraubt ist. An der Rotornabe 11 sind Blattlager 12 angeordnet, welche die Rotorblätter 13 drehbar um die Pitchachse 5 gelagert tragen. Dadurch kann der Anströmwinkel der Rotorblätter 13 mittels einer Antriebsvorrichtung verstellt werden, um die abgegebene Leistung der Windturbine dem Leistungsbedarf des Stromnetzes anzupassen. Weiterhin können mit Hilfe dieser sog. Pitchsteuerung der Rotorblätter 13 die mechanischen Belastungen reduziert werden.

Die Rotorwelle 6 ist um eine Rotorachse 2 drehbar gelagert, wobei die Axial- und Radialkräfte hauptsächlich von dem Hauptlager 7 aufgenommen und in den Maschinenträger 9 eingeleitet werden. Das Hauptlager 7 kann als Pendelrollenlager ausgebildet sein. Die im Folgenden verwendeten Radial- und Axialbezüge orientieren sich immer an der Rotorachse 2. An das der Rotornabe 11 abgewandte Ende der Rotorwelle 6 schließt sich ein nicht dargestelltes Getriebe an, worin die Rotationsenergie wird mit einem hohen Drehmoment eingeleitet wird. Das Getriebe verringert das Drehmoment unter Erhöhung der Drehgeschwindigkeit und überträgt die Rotationsenergie in einen Generator. Die Rotorwelle 6, das Hauptlager 7 und das Getriebe werden als vormontierte Baugruppe in einem Stück auf den Maschinenträger 9 montiert. Neben dem Hauptlager 7 erfolgt die Abstützung der beschriebenen Baugruppe über zwei Stützstreben des Getriebes. Die Übersetzung der Rotationsenergie erfordert, dass das Getriebe das hohe eingehende Drehmoment auf dem Maschinenträger 9 abstützen muss. Die Stützstreben und das Hauptlager 7 müssen enorme Kräfte übertragen, insbesondere bei Schwankungen des Moments, beispielsweise verursacht durch starke Windböen. Die Rotorwelle 6 kann dabei lastbedingte Verformungen von bis zu fünf Millimeter und Verschiebungen im Maße der Lagerspiele erfahren.

Der Maschinenträger 9 wird mit einem weiteren nicht dargestellten Trägerteil an Flanschen verschraubt und umfasst dabei einen dem Turm zugewandten, unten liegenden Ringflansch, der auf einem Ringkranz eines Azimutlagers der Windturbine aufliegt und darüber mit dem Turm verbunden ist. Das Azimutlager ermöglicht die horizontale Ausrichtung der Gondel der Windturbine gemäß der Windrichtung, die sogenannte Windrichtungsnachführung der Windturbine. Zur selbsttätigen Drehung der Gondel um den Turm sind an dem Azimutlager ein oder mehrer Azimutantriebe vorgesehen, die drehfest mit dem Maschinenträger 9 der Gondel verbunden sind. Dabei müssen die Azimutlager die auftretenden Lagerkräfte, wie Schub-, Kreisel- und Gierkräfte, aus dem Maschinenträger 9 der Gondel in den Turm einleiten.

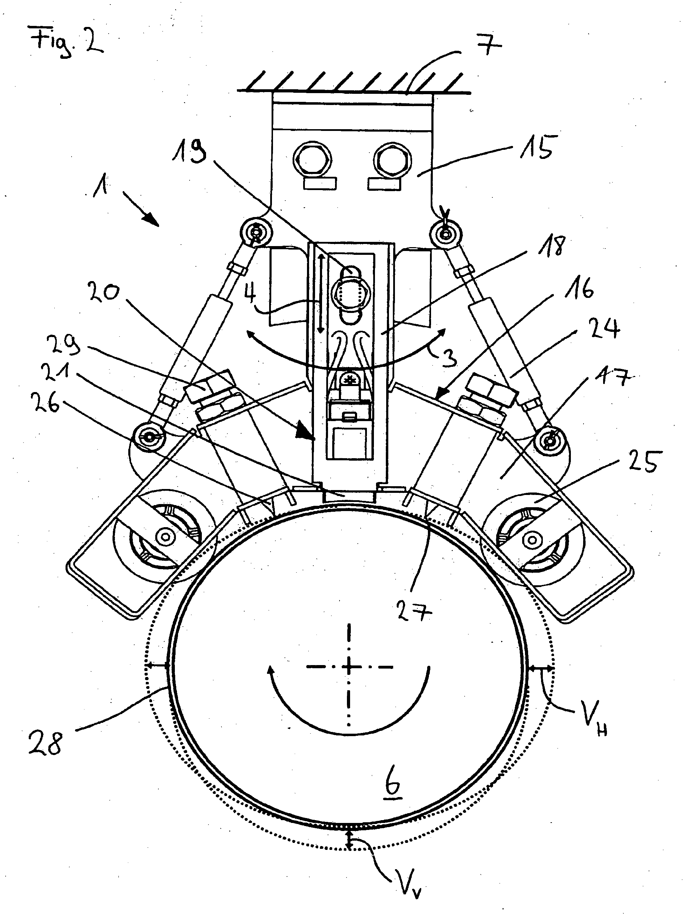

Aus Fig. 1 ist zu entnehmen, dass die Übertragungsvorrichtung 1 mit dem Halter 15 an dem Hauptlager 7 angeordnet ist. Die genaue Anordnung der Übertragungsvorrichtung 1 ist aus Fig. 2 und im Detail in Fig. 3 zu erkennen. Die Übertragungsvorrichtung 1 umfasst den Halter 15 und die daran beweglich angeordnete Nachführungsvorrichtung 14. Während der Halter 15 fest mit dem Hauptlager 7 verbunden ist, so kann sich die Nachführungsvorrichtung 14 in gewissem Maße mit der Rotorwelle 6 mitbewegen.

Die Nachführungsvorrichtung 14 umfasst einen Träger 16, als Federn 24 ausgeführte Vorspannmittel 24 und Rollen 25, wobei zwei Elektroden 26 und eine ausgeführte Schleifkontaktvorrichtung 20 von dem Träger aufgenommen werden. Wie aus Fig. 2 zu entnehmen, ist der Träger 16 T-förmig gestaltet, wobei dieser einen der Rotorwellenkrümmung entsprechend gekrümmten Querbalken 17 umfasst, welcher die Rotorwelle 6 zumindest teilweise umgreift. Der Rumpf 18 des T-Trägers 16 nimmt die Schleifkontaktvorrichtung 20 und eine Befestigungsvorrichtung auf, mittels welcher der Träger 16 der Nachführungsvorrichtung 14 sowohl in einer Schwenkrichtung 3 bzw. achsparallel zur Rotorachse 2 schwenkbar, und in einer Radialrichtung 4 verschiebbar an dem Halter 15 befestigt ist. Die Befestigungsvorrichtung kann als Langloch 19 in dem Träger 16 vorgesehen sein, wodurch eine Bewegung in Radialrichtung 4 möglich ist. Weiterhin ist auch ein Langloch in dem Halter denkbar oder die Befestigungsvorrichtung kann als in Radialrichtung 4 verschiebbare Schlittenkonstruktion ausgebildet sein. Die Nachführungsvorrichtung 14 ist mit den Rollen 25 und mittels der Federn 24 gegenüber der Rotorwelle 6 vorgespannt abgestützt. Die Federn 24 - hier Gasdruckfedern - sind an dem Halter 15 und am Querbalken 17 des T-Trägers 16 befestigt.

Die bewegliche Anordnung der Übertragungsvorrichtung 1 bewirkt, dass der Träger 16, und damit auch die Elektroden 26 und die Schleifkontaktvorrichtung 20, auftretende horizontalen und vertikalen Verschiebungen V_{H} und V_{V} der Rotorwelle 6 mitmachen. Wenn die Außenfläche der Rotorwelle 6 eine horizontale Verschiebung V_{H} erfährt, so bewirkt die vorgespannte Lagerung des Trägers 16 eine Mitbewegung des Trägers 16 in Schwenkrichtung 3. Bei einer vertikalen Verschiebung V_{V} vollführt der Träger 16 eine Mitbewegung mit der Rotorwelle 16 in Radialrichtung 4. Durch die Bewegungsmöglichkeiten in Schwenkrichtung 3 oder Radialrichtung 4 ist die Nachführungsvorrichtung 14 in der Lage alle Verschiebungen V_{H} und V_{V} auszugleichen und somit ein konstantes Spaltmaß S der Funkenstrecke 27 immer zu gewährleisten.

Fig. 3 zeigt einen Ausschnitt des Trägers 16 mit einer Elektrode 26 und der Schleifkontaktvorrichtung 20 im Zusammenwirken mit der Rotorwelle 6. Die Schleifkontaktvorrichtung 20 umfasst dabei eine Kohlebürste 21 die verschiebbar in einer Hülse 22 mit Anpressmitteln 23 angeordnet ist. Auf der Rotorwelle 6 ist eine Ringelektrode 28 angeordnet, welche von der Kohlebürste 21 permanent, durch die als Rollfeder 23 ausgebildete Anpressmittel vorgespannt, beaufschlagt wird. Da die Kohlebürste 21 mit einer Erdungsvorrichtung verbunden ist, wird so effektiv verhindert, dass es zu einer Aufladung des Rotors , d. h. der Rotorwelle 6, der Rotornabe 11 und der Rotorblätter 13 gegenüber der Erdungsvorrichtung kommt, da über die Schleifkontaktvorrichtung 20 ein im Wesentlichen permanenter elektrischer Kontakt zwischen der Ringelektrode 28 und der Erdungsvorrichtung besteht. Günstiger Weise ist dazu die Ringelektrode 28 auf der Rotorwelle 6 elektrisch mit der Rotornabe 11 und ggf. Rotorblättern 13 verbunden.

Da die Schleifkontaktvorrichtung 20 nicht geeignet ist, übermäßig hohe Ströme - wie Blitzströme - zu übertragen, sind in dem Träger 16 die Elektroden 26 vorgesehen, die zusammen mit der Ringelektrode 40 die Funkenstrecke 27 mit der Schlagweite S ausbildet. Da das Maß der Schlagweite S wesentlich für die Funktion der Blitzstromübertragung ist, muss dieses durch die o. g. Nachführungsvorrichtung 14 konstant gehalten werden. Denn wenn zum Zeitpunkt eines Blitzeinschlages in den Rotor der Windturbine die Schlagweite S, und damit auch der elektrische Widerstand der Funkenstrecke verformungs- oder verschiebungsbedingt übermäßig groß wäre, so wählte der Blitzstrom eine alternativen Ableitungsweg und könnte dadurch Komponenten der Windturbine zerstören. Weiterhin ist jede Elektrode 25 über Einstellmittel 29 in dem Träger 16 angeordnet, um die Schlagweite S einstellen, und bei Verschleiß der Abstützmittel bzw. der Rollen 25 nachstellen zu können. Bei der oben stehenden Ausführung übernimmt der Träger 16 und der Halter 15 die Funktion der Erdungsvorrichtung. Dies ist aber nicht zwingend erforderlich, sondern es ist auch eine separate Erdungsvorrichtung 35 gemäß der nachfolgend beschriebenen Ausgestakltung einsetzbar.

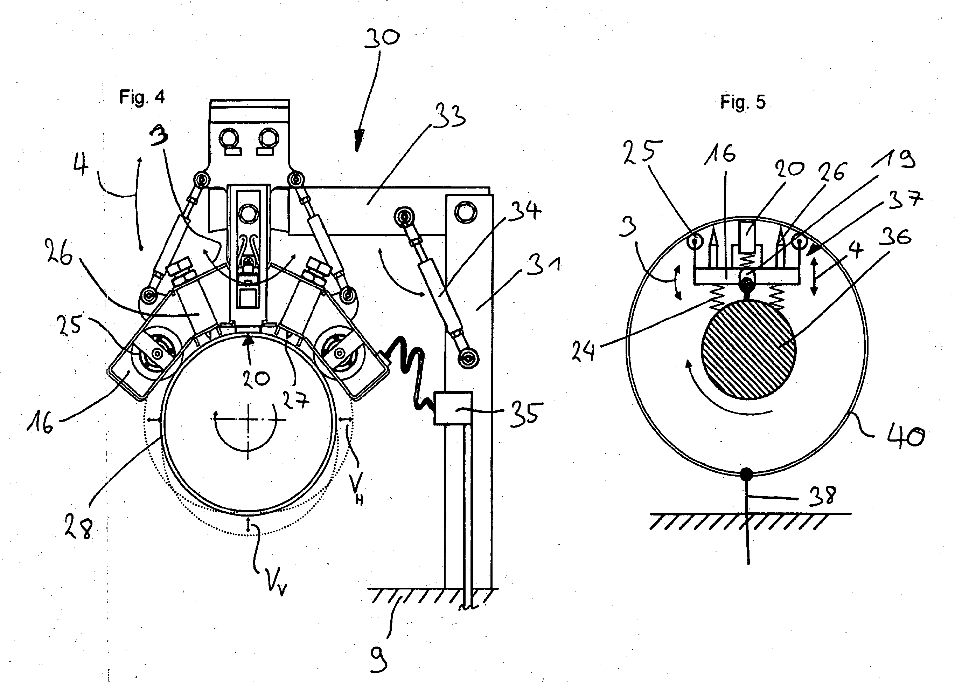

In Fig. 4 ist eine weitere Ausgestaltung der voran beschriebenen Ausführungsform gezeigt, wobei unveränderte Merkmale die gleichen Bezugszeichen wir in Fig. 1 - 3 aufweisen. Die Übertragungsvorrichtung 1' unterscheidet sich durch die Nachführungsvorrichtung 30, den Halter 31, die Befestigungsvorrichtung 33 und durch die Erdungsvorrichtung 35. Der Halter 31 der Übertragungsvorrichtung 1' ist nun nicht mehr an dem Hauptlager vorgesehen, sondern ist als Ständer 31 ausgebildet und direkt auf dem Maschinenträger 9 befestigt. Die Befestigungsvorrichtung 33 zwischen dem Halter 31 und dem Träger 16 umfasst einen Schwenkarm 33, welcher an dem Halter 31 schwenkbar gelagert ist. Der Schwenkarm 33 gestattet die Bewegbarkeit des Trägers 16 in Radialrichtung 4. Somit wird im Gegensatz zu Fig. 1 - 3 bei einer vertikalen Verschiebung V_{V} der Rotorwelle 6 der Träger 16 mit dem Schwenkarm 33 bewegt. Zwischen dem Halter 31 und dem Schwenkarm 33 ist eine Feder 34 vorgesehen, die für einen vorgespannten Kontakt zwischen den Abstützmitteln 25 des Trägers 16 und der Rotorwelle 6 sorgt.

Die Ableitung elektrostatischer Aufladungen oder von Blitzströmen aus der Übertragungsvorrichtung 1' erfolgt über die separate Erdungsvorrichtung 35. Diese ist mit den Elektroden 26, der Schleifkontaktvorrichtung 20 verbunden.

Eine alternative Ausführungsform der Übertragungsvorrichtung wird mittels Fig. 5 schematisch verdeutlicht. Dabei werden eine rotierbare Drehvorrichtung 36, eine dazu drehfeste Ringelektrode 40, eine Erdungsvorrichtung 38 und eine dazwischen wirkende Übertragungsvorrichtung 1" angeführt. Die Übertragungsvorrichtung 1" umfasst, analog zu oben, einen Träger 16, daran angeordnete Elektroden 26 und eine Schleifkontaktvorrichtung 20. Der Träger 16 ist über eine Nachführungsvorrichtung 30 in Schwenkrichtung 3 und in Radialrichtung 4 beweglich an einem Halter 39 an der Drehvorrichtung 36 befestigt. Somit rotiert die Übertragungsvorrichtung 1" mit der Drehvorrichtung 36 mit. Die Ringelektrode 40 steht fest. Die Funktion der Nachführungsvorrichtung 1" ist analog zu Fig. 1 - 3. Dies ist denkbar, wenn die Ringelektrode an einem Turm einer Windturbine angeordnet ist und die Übertragungsvorrichtung an der Gondel, wobei die Übertragungsvorrichtung um den Turm rotiert.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

**Bezugszeichenliste**

| | | | |
|---|---|---|---|
| 1 | Übertragungsvorrichtung | 22 | Hülse |
| 1' | Übertragungsvorrichtung | 23 | Rollfeder |
| 1" | Übertragungsvorrichtung | 24 | Federn |
| 2 | Rotorachse | 25 | Rolle |
| 3 | Schwenkrichtung | 26 | Elektrode |
| 4 | Radialrichtung | 27 | Funkenstrecke |
| 5 | Pitchachse | 28 | Ringelektrode |
| 6 | Rotorwelle | 29 | Einstellmittel |
| 7 | Hauptlager | 30 | Nachführungsvorrichtung |
| 8 | Verbindungsmittel | 31 | Halter |
| 9 | Maschinenträger | 32 | Übertragungsvorrichtung |
| 10 | Rotorflansch | 33 | Schwenkarm |
| 11 | Rotornabe | 34 | Feder |
| 12 | Blattlager | 35 | Erdungsvorrichtung |
| 13 | Rotorblatt | 36 | Drehvorrichtung |
| 14 | Nachführungsvorrichtung | 37 | Nachführungsvorrichtung |
| 15 | Halter | 38 | Erdungsvorrichtung |
| 16 | Träger | 39 | Halter |
| 17 | Querbalken | 40 | Ringelektrode |
| 18 | Rumpf | | |
| 19 | Langloch | X_{H} | Verschiebung |
| 20 | Schleifkontaktvorrichtung | X_{V} | Verschiebung |
| 21 | Kohlebürste | S | Spaltmaß |

## Patentansprüche

1. Übertragungsvorrichtung (1, 1', 1") für eine Windturbine zum Übertragen von elektrostatischer Energie zwischen einer rotierbaren Drehvorrichtung (6, 36) und einer, der Drehvorrichtung (6, 36) gegenüber unrotierbar vorgesehenen Erdungsvorrichtung (35, 38), umfassend
- einen Halter (15, 31, 39), eine Schleifkontaktvorrichtung (20) mit Anpressmitteln (23),
- und mindestens eine Elektrode (26) mit Einstellmitteln (29) zum Übertragen von Blitzstrom,
- wobei zwischen der Elektrode (26) und einer Ringelektrode (28, 40) eine Funkenstecke (27) mit einer Schlagweite (S) ausbildbar ist,
- und wobei die Schleifkontaktvorrichtung (20) die Ringelektrode (28) permanent beaufschlagt,
**dadurch gekennzeichnet, dass**
- der Halter (15, 31, 39) unrotierbar zur Erdungsvorrichtung (35) oder drehfest an der Drehvorrichtung (6, 36) angeordnet ist,
- die Übertragungsvorrichtung (1, 1', 1") eine zwischen Ringelektrode (28) und Elektrode (26) wirksam angeordnete Nachführungsvorrichtung (14, 30, 37) mit Abstützmitteln (25) umfasst,
- wobei die Ringelektrode (28) oder die Elektrode (26) drehfest mit der Drehvorrichtung (6, 36) verbunden ist,
- wobei die Elektrode (26) über die Nachführungsvorrichtung (14, 30, 37) bewegbar gegenüber dem Halter (15, 31, 39) angeordnet ist,
- und wobei die Elektrode (26) über die Abstützmittel (25) derart gegenüber der Drehvorrichtung (6,36) oder/und gegenüber der Ringelektrode (28, 40) abgestützt ist, so dass die Schlagweite (S) ein minimales Maß nicht unterschreiten kann.

2. Übertragungsvorrichtung (1, 1', 1") nach Anspruch 1, **dadurch gekennzeichnet, dass** die Nachführungsvorrichtung Vorspannmittel (24, 34) umfasst, die wirksam zwischen dem Halter (15, 31, 39) und den Abstützmitteln (25) angeordnet sind, so dass die Abstützmittel (25) immer an der Drehvorrichtung (3, 36) oder/und an der Ringelektrode (28, 40) derart vorgespannt anliegen, und so die Schlagweite (S) ein maximales Maß nicht überschreiten kann.

3. Übertragungsvorrichtung (1,1', 1") nach Anspruch 1 oder 2, **dadurch gekennzeichnet, dass** die Elektrode (26) schwenkbar und verschiebbar gegenüber dem Halter (15, 31, 39) angeordnet ist.

4. Übertragungsvorrichtung (1, 1', 1 ") nach Anspruch 1 oder 3, **dadurch gekennzeichnet, dass** die Nachführungsvorrichtung (14, 30, 37) ein Träger (16) umfasst, der beweglich an dem Halter (15, 31 ,39) angeordnet ist und die Elektrode (26) und die Abstützmittel (25) aufnimmt.

5. Übertragungsvorrichtung (1, 1', 1") nach Anspruch 4, **dadurch gekennzeichnet, dass** die Vorspannmittel (25) an dem Halter (15, 31, 39) und an dem Träger (16) angeordnet sind, und der Träger (16) die Schleifkontaktvorrichtung (20) aufnimmt.

6. Übertragungsvorrichtung (1, 1', 1") nach Anspruch 5, **dadurch gekennzeichnet, dass** die Schleifkontaktvorrichtung (20) die Ringelektrode (28, 40) beaufschlagt.

7. Übertragungsvorrichtung (1, 1', 1") nach einem der voran gestellten Ansprüche, **dadurch gekennzeichnet, dass** die Abstützmittel (25) als mindestens eine am Träger (16) gelagerte Rolle (25) ausgebildet sind.

8. Übertragungsvorrichtung (1, 1') nach einem der voran gestellten Ansprüche, **dadurch gekennzeichnet, dass** die Drehvorrichtung (6) als Rotorwelle (6) einer Windturbine mit einer Ringelektrode (28) ausgebildet ist, und die Elektrode (26) und/oder die Schleifkontaktvorrichtung (20) mit der Erdungsvorrichtung (35) verbunden sind.

9. Übertragungsvorrichtung (1) nach Anspruch 7, **dadurch gekennzeichnet, dass** der Halter (15) an einem Hauptlager (7) der Rotorwelle (9) angeordnet ist.

10. Übertragungsvorrichtung (1") nach einem der voran gestellten Ansprüche, **dadurch gekennzeichnet, dass** die Drehvorrichtung (36) als Rotorwelle einer Windturbine ausgebildet ist, wobei der Halter (39) an der Rotorwelle angeordnet ist, und die Ringelektrode (40) drehfest angeordnet die Rotorwelle umgreift und mit der Erdungsvorrichtung (38) verbunden ist.

11. Übertragungsvorrichtung (1") nach einem der voran gestellten Ansprüche, **dadurch gekennzeichnet, dass** die Drehvorrichtung (36) eine Gondel einer Windturbine ist, wobei der Halter (39) an der Gondel angeordnet ist, und die Ringelektrode (40) an einem Turm der Windturbine angeordnet ist und mit der Erdungsvorrichtung (38) verbunden ist.

12. Übertragungsvorrichtung nach einem der voran gestellten Ansprüche, **dadurch gekennzeichnet, dass** die Drehvorrichtung eine Gondel einer Windturbine mit einer Ringelektrode ist, wobei der Halter an einem Turm einer Windturbine angeordnet ist und die Elektrode und/oder die Schleifkontaktvorrichtung mit der Erdungsvorrichtung verbunden sind.

13. Übertragungsvorrichtung nach einem der voran gestellten Ansprüche, **dadurch gekennzeichnet, dass** die Drehvorrichtung als Rotorblatt einer Windturbine mit einer Ringelektrode ausgebildet ist, und die Elektrode und/oder die Schleifkontaktvorrichtung mit der Erdungsvorrichtung verbunden sind.

14. Windturbine umfassend eine rotierbaren Drehvorrichtung (6, 36) und eine, der Drehvorrichtung (6, 36) gegenüber unrotierbar vorgesehenen Erdungsvorrichtung (35, 38), **gekennzeichnet durch** eine Übertragungsvorrichtung (1, 1', 1") nach einem oder mehreren der voran gestellten Ansprüche.

## Claims

1. Transmission device (1, 1', 1") for a wind turbine for transferring electrostatic energy between a rotatable rotary device (6, 36) and a grounding device (35, 38) that cannot be rotated with respect to the rotary device (6, 36), comprising
- a holder (15, 31, 39), a sliding contact device (20) with pressing means (23),
- at least one electrode (26) with adjusting means (29) to transmit lightning current,
- wherein a spark gap (27) with a sparking distance (S) can be formed between the electrode (26) and a ring electrode (28, 40),
- and whereas the sliding contact device (20) permanently acts upon the ring electrode (28),
**characterized in that**
- the holder (15, 31, 39) is arranged in a non-rotatable manner relative to the grounding device (35) or in a manner of being rotationally fixed on the rotating device (6, 36),
- the transmission device (1, 1', 1") comprises a tracking device (14, 30, 37) which is effectively arranged between the ring electrode (28) and the electrode (26) with supporting means (25),
- wherein the ring electrode (28) or the electrode (26) is connected to the rotary device (6, 36) in a manner of being rotationally fixed,
- wherein the electrode (26) is arranged in a movable manner relative to the holder (15, 31, 39) via the tracking device (14, 30, 37)
- and wherein the electrode (26) is supported relative to the rotary device (6,36) or/and relative to the ring electrode (28, 40) by the supporting means (25) in such a way that the sparking distance (S) cannot fall below a minimal dimension.

2. Transmission device (1, 1', 1") according to claim 1, **characterized in that** the tracking device comprises prestressing means (24, 34), which are effectively arranged between the holder (15, 31, 39) and the supporting means (25), so that the supporting means (25) always lies against the rotary device (3, 36) or/and against the ring electrode (28, 40) in a manner of being prestressed, and so the sparking distance (S) cannot exceed a maximum dimension.

3. Transmission device (1, 1', 1") according to claim 1 or 2, **characterized in that** the electrode (26) is pivotally and movably arranged relative to the holder (15, 31, 39).

4. Transmission device (1, 1', 1") according to claim 1 or 3, **characterized in that** the tracking device (14, 30, 37) comprises a carrier (16), which is movably arranged on the holder (15, 31, 39) and receives the electrode (26) and the supporting means (25).

5. Transmission device (1, 1', 1") according to claim 4, **characterized in that** the prestressing means (24) are arranged on the holder (15, 31, 39) and on the carrier (16), and the carrier (16) receives the sliding contact device (20).

6. Transmission device (1, 1', 1") according to claim 5, **characterized in that** the sliding contact device (20) acts upon the ring electrode (28, 40).

7. Transmission device (1, 1', 1") according to one of the preceding claims, **characterized in that** the supporting means (25) are formed as at least one roller (25) supported on the carrier (16).

8. Transmission device (1, 1') according to one of the preceding claims, **characterized in that** the rotary device (6) is designed as a rotor shaft (6) of a wind turbine with a ring electrode (28), and the electrode (26) and/or the sliding contact device (20) are connected to the grounding device (35).

9. Transmission device (1) according to claim 7, **characterized in that** the holder (15) is arranged on a main bearing (7) of the rotor shaft (9).

10. Transmission device (1") according to one of the preceding claims, **characterized in that** the rotating device (36) is designed as the rotor shaft of a wind turbine, wherein the holder (39) is arranged on the rotor shaft, and the ring electrode (40) torque-proof surrounds the rotor shaft and is connected to the grounding device (38).

11. Transmission device (1") according to one of the preceding claims, **characterized in that** the rotary device (36) is a nacelle of a wind turbine, wherein the holder (39) is arranged on the nacelle, and the ring electrode (40) is arranged on a tower of wind turbine and is connected to the grounding device (38).

12. Transmission device according to one of the preceding claims, **characterized in that** the rotary device is a nacelle of a wind turbine with a ring electrode, wherein the holder is arranged on a tower of a wind turbine and the electrode and/or the sliding contact device are connected to the grounding device.

13. Transmission device according to one of the preceding claims, **characterized in that** the rotary device is designed as a rotor blade of a wind turbine with a ring electrode and the electrode and/or the sliding contact device are connected to the grounding device.

14. Wind turbine comprising a rotatable rotary device (6, 36) and a grounding device (35, 38) that cannot be rotated with respect to the rotary device (6, 36) **characterized in** a transmission device (1, 1', 1") according to one or more of the preceding claims.

## Revendications

1. Dispositif de transmission (1, 1', 1") pour une turbine éolienne transférant l'énergie électrostatique entre un dispositif rotatif (6, 36) et un dispositif de mise à la terre (35, 38) qui ne peut être mis en rotation par rapport à la rotation système rotatif tournant (6, 36), comprenant
- un support (15, 31, 39), un dispositif à contact glissant (20) avec des moyens de pression (23),
- au moins une électrode (26) avec des moyens de réglage (29) pour transmettre un courant de foudre,
- dans lequel un éclateur (27) avec une distance de formation d'étincelles (S) peut être formée entre l'électrode (26) et une électrode annulaire (28, 40),
- et que le dispositif de contact glissant (20) agissant de façon permanente sur l'électrode annulaire (28),
**caractérisé en ce que**
- les montants (15, 31, 39) sont disposés d'une manière non-rotative par rapport au dispositif de mise à la terre (35) ou d'une manière d'être fixe en rotation sur le dispositif rotatif (6, 36),
- le dispositif de transmission (1, 1', 1") comprend un dispositif de repérage (14, 30, 37) qui est disposé efficacement entre l'électrode annulaire (28) et l'électrode (26) avec des moyens de support (25),
- dans lequel l'électrode annulaire (28) ou l'électrode (26) est relié au dispositif rotatif (6, 36) d'une manière qu'il soit fixe en rotation,
- dans lequel l'électrode (26) est disposé de manière mobile par rapport au montant (15, 31, 39) par l'intermédiaire du dispositif de repérage (14, 30, 37)
- et dans lequel l'électrode (26) est supportée par rapport au dispositif rotatif (6,36) et / ou par rapport à l'électrode annulaire (28, 40) par les moyens de support (25) de telle sorte que la distance d'étincelage (S) ne peut pas tomber en dessous d'une dimension minimale.

2. Dispositif de transmission (1, 1', 1") selon la revendication 1, **caractérisé en ce que** le dispositif de suivi comporte des moyens de précontrainte (24, 34), qui sont effectivement disposés entre les montants (15, 31, 39) et des moyens de support (25), de sorte que les moyens de support (25) se trouvent toujours sur le dispositif rotatif (3, 36) ou / et contre l'électrode annulaire (28, 40) d'une manière à être précontraint, de manière à ce que la distance d'étincelage (S) ne puisse pas dépasser une dimension maximale.

3. Dispositif de transmission (1, 1', 1") selon la revendication 1 ou 2, **caractérisé en ce que** l'électrode (26) soit disposée de manière pivotante et mobile par rapport aux montants (15, 31, 39).

4. Dispositif de transmission (1, 1', 1") selon la revendication 1 ou 3, **caractérisé en ce que** le dispositif de repérage (14, 30, 37) comprenne un support (16), disposé de manière mobile sur les montants (15, 31, 39) et recevant l'électrode (26) et les moyens de support (25).

5. Dispositif de transmission (1, 1', 1") selon la revendication 4, **caractérisé en ce que** les moyens de précontrainte (24) soient disposés sur les montants (15, 31, 39) et sur le support (16), et le support (16) reçoit le dispositif de contact glissant (20).

6. Dispositif de transmission (1, 1', 1") selon la revendication 5, **caractérisé en ce que** le dispositif de contact de glissement (20) agit sur l'électrode annulaire (28, 40).

7. Dispositif de transmission (1, 1', 1") selon l'une quelconque des revendications précédentes, **caractérisé en ce que** les moyens de support (25) sont formés par au moins un rouleau (25) porté par le support (16).

8. Dispositif de transmission (1, 1') selon l'une quelconque des revendications précédentes, **caractérisé en ce que** le dispositif rotatif (6) est par design l'arbre de transmission (6) d'une éolienne avec une électrode annulaire (28), et l'électrode (26) et / ou le dispositif de contact de glissement (20) sont reliés au dispositif de mise à la terre (35).

9. Dispositif de transmission (1) selon la revendication 7, **caractérisé en ce que** le montant (15) est disposé sur le roulement principal (7) de l'arbre de transmission (9).

10. Dispositif de transmission (1") selon l'une quelconque des revendications précédentes, **caractérisé en ce que** le dispositif de rotation (36) est par design l'arbre de transmission d'une éolienne, dans lequel le support (39) est arrangé sur l'arbre de transmission, et l'électrode annulaire (40), résistant au couple, entoure l'arbre de transmission et est reliée au dispositif de mise à la terre (38).

11. Dispositif de transmission (1") selon l'une quelconque des revendications précédentes, **caractérisé en ce que** le dispositif rotatif (36) est la nacelle d'une éolienne, dans lequel le support (39) est arrangé sur la nacelle, et l'électrode annulaire (40) est disposée sur la tour de l'éolienne et est relié au dispositif de mise à la terre (38).

12. Dispositif de transmission selon l'une quelconque des revendications précédentes, **caractérisé en ce que** le dispositif rotatif est une nacelle d'une éolienne avec une électrode annulaire, où le support est disposé sur la tour de l'éolienne et l'électrode et / ou le dispositif de contact glissant sont reliés au dispositif de mise à la terre.

13. Dispositif de transmission selon l'une quelconque des revendications précédentes, **caractérisé en ce que** le dispositif rotatif est sous la forme d'une pale d'éolienne avec une électrode annulaire et l'électrode et / ou le dispositif de contact de glissement sont reliés au dispositif de mise à la terre.

14. turbine éolienne comprenant un dispositif rotatif tournant (6, 36) et un dispositif de mise à la terre (35, 38) qui ne peut être mis en rotation par rapport au dispositif rotatif (6, 36), caractérisé en un dispositif de transmission (1, 1', 1") selon l'une ou plusieurs des revendications précédentes.
